# EUROPEAN PATENT APPLICATION

(11) **EP 2 026 573 A2**
(43) Date of publication of application: **18.02.2009**
(21) Application number: 08160085.0
(22) Date of filing: 10.07.2008
(51) Int. Cl.: H04N 5/765, G11B 31/00

(54) **Digital content recording apparatus and dubbing method thereof**

(30) Priority: 14.08.2007 KR 20070081958
(71) Applicant: Samsung Electronics Co., Ltd., Suwon-si Gyeonggi-do (KR)
(72) Inventor: Park, Jae Won, Dongdaemun-gu, Seoul (KR)
(74) Representative: Van Someren, Petronella F. H. M.

(57) **Abstract**

A disc-recorder (200) and a DVR (400) are spaced apart from each other and connected through a plurality of signal lines (L1,L2,L3). A user sends a control command by using a remote controller (100) to remotely control the disc-recorder (200). The disc-recorder (200) converts an infrared ray code transmitted from the remote controller (100) such that the infrared ray code can be recognized by the DVR (400), and then transmits the infrared ray code through a first signal line (L1). Then, the DVR (400) transmits stored digital contents and title information thereof through a second signal line (L2). The disc-recorder (200) records the received digital contents on a portable disc while reproducing the digital contents through a display apparatus.

## Description

### BACKGROUND OF THE INVENTION

### 1. Field of the Invention

The present general inventive concept relates to a digital content recording apparatus to dub digital contents of an external apparatus and a dubbing method thereof.

### 2. Description of the Related Art

At the present time, various recording systems equipped with one of a VCR (video cassette recorder) and a disc-recorder or integrated with the VCR and the disc-recorder have been developed and widely used. The VCR uses a video tape as a recording medium and the disc-recorder uses an optical disc {e.g. CD, DVD (digital video recorder)} as a recording medium. The recording system integrated with the VCR and the disc-recorder has a dubbing operation reproducing an AN signal recorded on a video tape and recording the AN signal on an optical disc.

Such a recording system has a function of performing a dubbing operation between various recording media, but does not have a function of connecting to an external apparatus and performing a dubbing operation (hereinafter, referred to as external dubbing operation) in cooperation with the external apparatus. The external apparatus denotes a recording system (e.g. DVD) that records signals obtained through a monitoring camera installed in a building or a home in order to prevent theft and monitor a person coming in and out.

If the recording operation is repeated several times, the video tape must be frequently replaced due to the degradation of picture quality. Thus, a DVR apparatus uses an HDD (hard disk drive) or a DVD as a recording medium instead of a video tape.

Since a DVR uses a digital type storage medium such as an HDD or a DVD, the DVR can in addition to easily reproducing or searching for stored digital contents, can also easily edit and transmit the digital contents.

A DVR can convert an analog image signal input from a monitoring camera into a digital image signal, compress the digital image signal by using a compression scheme such as an MPEG 2, an MPEG 4 or an H.264/AVC, restore the compressed digital image signal, and record or reproduce the restored digital image signal for a long time. In addition, a DVR has been developed, which can be connected to a set-top box receiving broadcasting contents, compress and restore the received broadcasting contents, and record or reproduce the restored broadcasting contents.

However, a recording system equipped with one of a VCR and a disc-recorder or integrated with the VCR and the disc-recorder has been mainly utilized within the limited range in which movies or recorded images are recorded or reproduced in a home, but has not utilized a large amount of digital contents stored in a DVR as an external apparatus. For example, since the recording system and the DVR are installed at different spaces, a user is inconvenienced when reproducing digital contents that have already been recorded in the DVR.

Further, a remote controller for remotely controlling a recording system used in a home and a remote controller for remotely controlling a DVR must be individually provided, and theses remote controllers must be separately used.

Furthermore, in order to record digital contents, which are stored in the DVR, on a portable disc such as CD or DVD, a disc-recorder must be additionally provided.

### SUMMARY OF THE INVENTION

The present general inventive concept can perform an external dubbing operation capable of receiving and reproducing digital contents stored in an external apparatus and simultaneously recording the digital contents on the recording medium of a recording system.

The present general inventive concept also provides a user with convenience by recording digital contents stored in a DVR, which is an external apparatus, on a recording system by using one remote controller for remotely controlling the recording system.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept can be achieved by providing a digital content recording apparatus including: an external apparatus to store digital contents; a remote controller to output a control command to select the digital contents; and a recording system to transmit the control command of the controller to the external apparatus and recording digital contents provided from the external apparatus on a recording medium.

The recording medium may include a portable CD or DVD.

The controller may include a remote controller that transmits an infrared ray code according to operations of keys corresponding to the control command.

The remote controller includes a key to set an operation mode, a key to select the digital contents, and a key to perform a recording operation for the selected digital contents.

The recording system and the external apparatus are spaced apart from each other and connected through a plurality of signal lines in order to exchange signals.

The recording system includes a disc-recorder that records the digital contents on a disc and the external apparatus includes a DVR.

At least one of the signal lines is a first signal line, through which the recording system analyzes the infrared ray code transmitted from the remote controller and transmits an infrared ray code converted corresponding to the analyzed infrared ray code to the external apparatus, and at least one of the signal lines is a second signal line through which the external apparatus transmits an A/V signal for the digital contents to the recording system.

The digital content recording apparatus may further include a television connected to the disc-recorder that records the digital contents on the disc while reproducing the digital contents through the television.

The DVR includes a photographing apparatus to monitor and a set-top box to broadcast reception, and records digital contents, which are obtained through the photographing apparatus or received through the set-top box, on an HDD or a DVD.

The DVR may include: a receiver to receive the infrared ray code provided from the disc-recorder; a controller to control an operation of transmitting title information of digital contents recorded on an HDD or a DVD and the digital contents to the disc-recorder according to the infrared ray code received through the receiver; and an image processor to restore the digital contents recorded on the HDD or the DVD to convert the digital contents into an A/V signal.

The disc-recorder may include: a receiver to receive the infrared ray code wirelessly transmitted through the remote controller; and a converter to transmit an infrared ray code, which is converted to be recognized by the DVR by using a previously stored conversion table according to the received infrared ray code, through the signal lines.

The converter includes an IR blaster.

The foregoing and/or other aspects and utilities of the present general inventive concept can also be achieved by providing a digital content recording apparatus including: a DVR to store photographed digital contents or broadcasted digital contents on a recording medium; a disc-recorder to transmit a control command set by a user to the DVR in order to receive the digital contents, and to record the digital contents on a portable recording medium while reproducing the digital contents; a television to display title information of the digital contents and the reproduced digital contents such that the digital contents are selected; and a remote controller to transmit a user control command to select or record the digital contents to the disc-recorder.

The disc-recorder includes an IR blaster that converts and transmits an infrared ray code, which is transmitted from the remote controller, to be recognized by the DVR.

The disc-recorder and the DVR exchange signals through a plurality of signal lines, and the signal lines include a first signal line to transmit the infrared ray code and a second signal line to transmit the digital contents and the title information of the digital contents.

The foregoing and/or other aspects and utilities of the present general inventive concept can also be achieved by providing a dubbing method of a digital content recording apparatus that connects a DVR to store digital contents to a disc-recorder to record the digital contents, the method including: transmitting a control command to record the digital contents of the DVR; converting the control command to be recognized by the DVR, and transmitting the converted control command to the DVR; transmitting title information of the digital contents stored in the DVR to the disc-recorder; displaying the received title information through a display apparatus connected to the disc-recorder; selecting the digital contents, which is to be recorded, selected by a user through a remote controller based on the title information, and requesting transmission of the selected digital contents; transmitting the selected digital contents from the DVR to the disc-recorder in response to the request; and recording by the disc-recorder the received digital contents on a recording medium while reproducing the digital contents.

The control command is transmitted using the remote controller to remotely control the disc-recorder.

The remote controller includes a mode setting key that sets or releases an operation mode to record the digital contents of the DVR.

According to embodiments as described above, digital contents of an external apparatus connected to a disc-recorder can be simply dubbed on a portable disc, and only one remote controller to remotely control the disc-recorder is used, so that a digital content recording apparatus can be achieved at a low cost without using additional elements.

The foregoing and/or other aspects and utilities of the present general inventive concept can also be achieved by providing a digital content recording apparatus, including an external apparatus to record digital contents and a recording system to transmit a control command to the external apparatus to select the stored digital contents to be recorded therein and to record the selected digital contents provided from the external apparatus on a recording medium.

The foregoing and/or other aspects and utilities of the present general inventive concept can also be achieved by providing a dubbing method of a digital content recording apparatus that connects a DVR that stores digital contents to a disc-recorder that records the digital contents, the method including receiving a control command from an external source and converting the control command to be receivable at the DVR, transmitting the converted control command to the DVR, receiving at least title information of digital contents stored in the DVR in response to the converted control command, selecting digital contents to be recorded based on the title information, and requesting the selected digital contents, transmitting the selected digital contents by the DVR in response to the requesting of the selected digital contents, and recording the transmitted digital contents on a recording medium while reproducing the transmitted digital contents.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a block diagram of a digital content recording apparatus according to an embodiment of the present general inventive concept;
FIG. 2 is a view illustrating infrared ray codes corresponding to a plurality of keys provided in a remote controller to remotely control a disc-recorder in order to dub digital contents of an external apparatus according to an embodiment of the present general inventive concept;
FIG. 3 is a view illustrating the title list of digital contents displayed on a TV screen connected to a disc-recorder according to an embodiment of the present general inventive concept; and
FIG. 4 is a low diagram illustrating a method in which a recording system dubs digital contents according to an embodiment of the present general inventive concept.

### DETAILED DESCRIPTION OF THE PREFERRED EMBODIMENTS

Hereinafter, a digital content recording apparatus and a dubbing method thereof according to embodiments of the present general inventive concept will be described with reference to accompanying drawings.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

A recording apparatus applied to an embodiment of the present general inventive concept can be equipped with one of a VCR and a disc-recorder or integrated with the VCR and the disc-recorder. In the present embodiment, the disc-recorder capable of recording digital contents on a portable disc (DVD) will be described as one example. However, the present embodiment is not limited thereto. For example, digital contents provided from an external apparatus can be directly recorded on a recording medium, or the digital contents can also be recorded on the recording medium after a signal conversion process.

In the present embodiment, for example, a DVR capable of using an HDD or a DVD (external apparatus) as a recording medium is used for an external apparatus. However, the external apparatus of the present embodiment is not limited thereto, For example, an external apparatus capable of recording digital contents obtained by a photographing apparatus or wirelessly received through a set-top box, or an external apparatus capable of performing signal-communication with a disc-recorder can be provided.

In the present embodiment, for example, a remote controller to remotely control a disc-recorder is used. However, the present embodiment is not limited thereto. For example, a user's command may also be set using the operation keys of an operation panel provided in the disc-recorder.

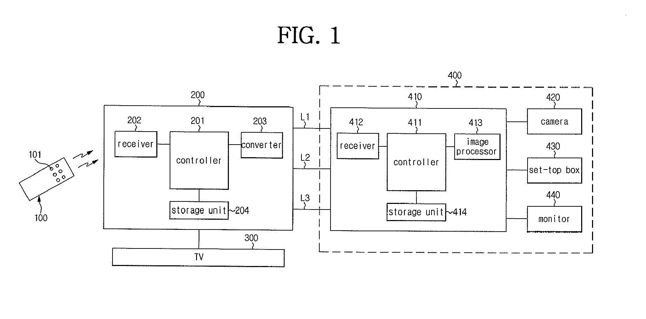

As illustrated in FIG. 1, the digital content recording apparatus according to the present embodiment includes a remote controller (or other type of mobile device) 100, a disc-recorder 200, a television 300 connected to the disc-recorder 200, and a DVR 400.

The disc-recorder 200 and the DVR 400 can be installed at various spaces (locations) while being apart from each other, and they exchange signals through first to third signal lines L1 to L3. When the disc-recorder 200 analyzes an infrared ray code transmitted from the remote controller 100 and transmits an infrared ray code converted corresponding to the analyzed infrared ray code to the DVR 400, the first signal line L1 is used. When the DVR 400 transmits an A/V signal for digital contents to the disc-recorder 200, the second signal line L2 is used. Further, when the disc-recorder 200 transmits a power start signal to the DVR 400 for supply of power, the third signal line L3 is used.

The remote controller 100 is used in order to remotely control the typical basic function of a disc-recorder in a normal operation mode. Further, in the case of setting an external dubbing mode, the remote controller 100 is used in order to remotely control an operation dubbing digital contents of the DVR 400.

To this end, the remote controller 100 includes a key operation unit 101 having a power switch to supply or block power of a system, a mode setting key to set an operation mode, and keys to set various functions. Even if the same key is operated, the remote controller 100 can perform one of the basic functions of the disc-recorder or one of the functions for the external dubbing operation according to the operation modes having been set when the key is operated.

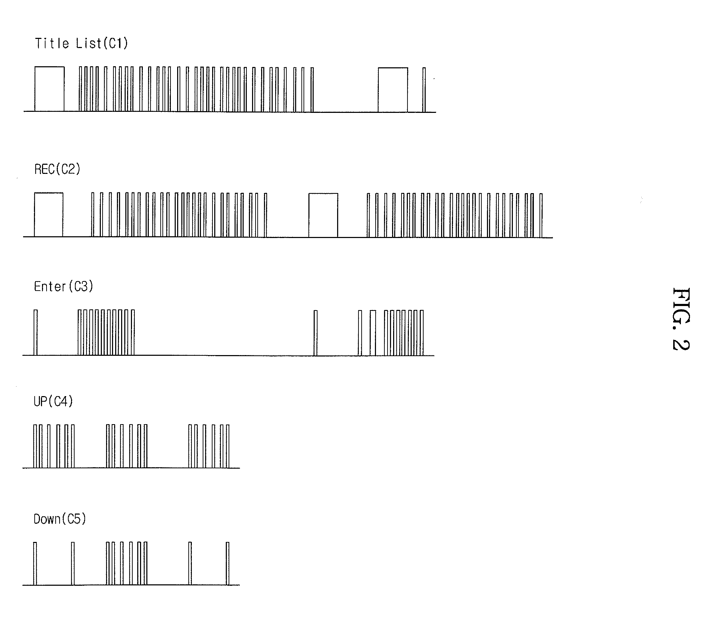

The disc-recorder 200 includes a controller 201, a receiver 202, a converter 203 and a storage unit 204. The receiver 202 receives infrared ray codes wirelessly transmitted through the remote controller 100 and provides the received infrared ray codes to the controller 201. For example, the infrared ray code transmitted from the remote controller 100 can include a Title List C1, an REC C2, an Enter C3, an Up C4 and a Down C5, as illustrated in FIG. 2.

The controller 201 analyzes the infrared ray codes provided through the receiver 202 and performs a corresponding function according to the analysis results. At this time, when the external dubbing mode is set, the controller 201 transmits the analyzed infrared ray codes to the converter 203.

The converter 203 performs code conversion relative to the received infrared ray codes by using a previously stored conversion table such that the DVR 400 can recognize the infrared ray codes, and then transmits the infrared ray codes after the code conversion to the DVR 400 through the first signal line L1. The converter 203 is an infrared ray transmission apparatus that performs code conversion relative to infrared ray codes and transmits the converted infrared ray codes, and can be prepared in the form of an IR blaster.

The storage unit 204 records digital contents on a DVD under the control of the controller 201.

The DVR 400 includes an external recorder 410, a camera 420 connected to the external recorder 410, a set-top box 430 and a monitor 440.

The external recorder 410 converts images photographed through the camera 420 into digital contents, and stores the digital contents in a storage unit 414. Further, the external recorder 410 converts broadcasting contents received through the set-top box 430 into digital contents, and stores the digital contents in the storage unit 414.

The monitor 440 displays the digital contents stored in the storage unit 414 when the digital contents are reproduced.

The external recorder 410 includes a controller 411, a receiver 412, an image processor 413 and the storage unit 414.

The image processor 413 digitally converts image signals provided through the camera 420 and the set-top box 430, compresses and restores the converted image signals, and reproduces the image signals.

The receiver 412 receives the infrared ray codes converted by the converter 203 through the first signal line L1, and provides the received infrared ray codes to the controller 411.

In a case in which the external dubbing mode is set and an infrared ray code requesting transmission of information is received in a title list through the receiver 412, the controller 411 provides title information on the digital contents stored in the storage unit 414 to the disc-recorder 200 through the second signal line L2 according to the received infrared ray code.

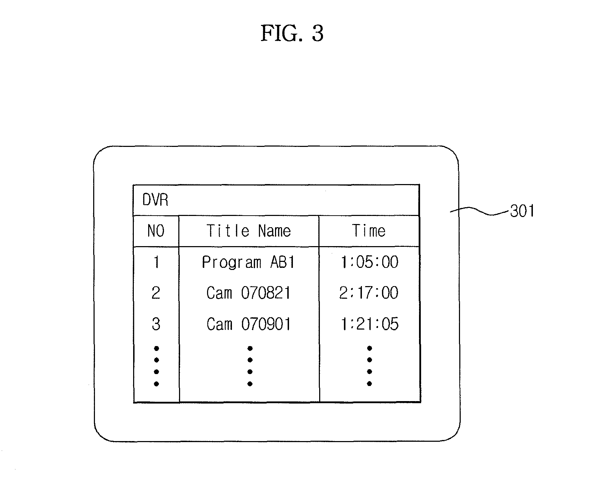

The disc-recorder 200 displays the title information provided through the second signal line L2 on a screen 301 of the television 300. For example, the screen 301 illustrated in FIG. 3 represents title information on the digital contents stored in the DVR 400, and displays a title name and a recording time.

Accordingly, a user can perform a series of key operations using the key operation unit 101 of the remote controller 100 to select a title of digital contents to be recorded on a disc (DVD), and record the digital contents of the selected title. An infrared ray code corresponding to such key operation is converted through the receiver 202 and the converter 203, is transmitted through the first signal line L1, and then received in the controller 411 through the receiver 412 of the external recorder 410.

The controller 411 controls digital contents selected by a user from the digital contents stored in the storage unit 414 to be restored into A/V signals by the image processor 413, and then transmits the A/V signals of the selected digital contents to the disc-recorder 200 through the second signal line L2.

The disc-recorder 200 controls an operation of transmitting the received AN signals to the television 300 to reproduce and display the digital contents on the screen 301, and simultaneously controls a dubbing operation compressing and digitally converting the received A/V signals and recording the converted A/V signals on a portable disc (DVD). If such a dubbing operation ends, a user releases the external dubbing mode by using the mode setting key provided in the key operation unit 101 of the remote controller 100.

When the external dubbing mode is released, the disc-recorder 200 performs the basic function according to the infrared ray codes of the remote controller 100 in a normal mode.

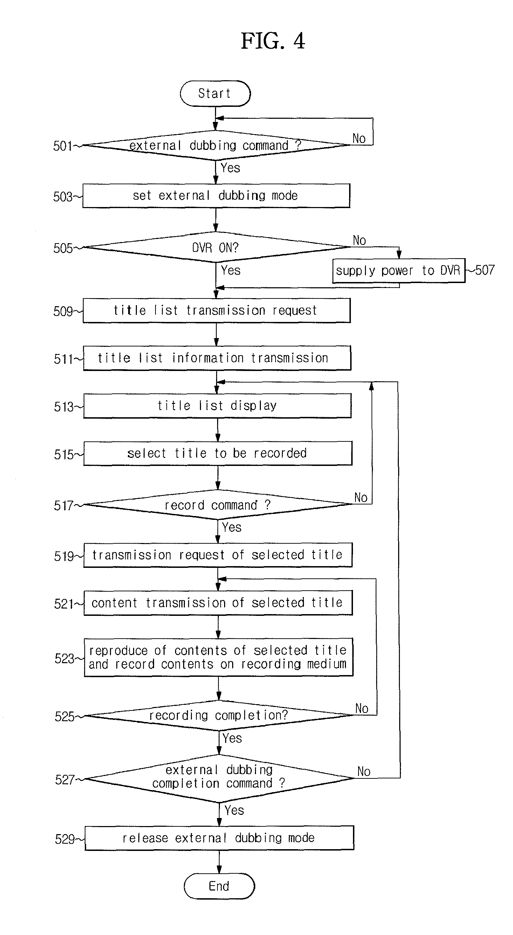

Hereinafter, the dubbing method of the digital content recording apparatus according to an embodiment of the present general inventive concept will be described with reference to FIG. 4.

First, the controller 201 of the disc-recorder 200 analyzes an infrared ray code received through the receiver 202, and determines if the analyzed infrared ray code represents an external dubbing command to set the external dubbing mode (operation 501).

When it is determined that the analyzed infrared ray code represents the external dubbing command, the controller 201 switches the current operation mode into the external dubbing mode (503). Then, the controller 201 checks the signal of the third signal line L3 to determine if the DVR 400 is in an on state (operation 505). When it is determined that the DVR 400 is not in an on state, the controller 201 outputs a power start signal to the third signal line L3 such that power can be supplied to the DVR 400. Accordingly, power is supplied to the DVR 400 (operation 507).

In a case in which the external dubbing mode is set, a user operates a key of the key operation unit 101, which corresponds to the Title List C1. Accordingly, the remote controller 100 transmits an infrared ray code, which is converted by the converter 203 in order to request title information of digital contents, through the first signal line L1 (operation 509).

The controller 411 of the external recorder 410 transmits the title information of the digital contents stored in the storage unit 414 through the second signal line L2 (operation 511).

The controller 201 of the disc-recorder 200 transmits the title information of the digital contents, which is received through the second signal line L2, to the television 300, so that the title information can be displayed on the screen 301 (operation 513).

The user selects a title to be recorded on a disc (DVD) by using the key operation unit 101 of the remote controller 100 with reference to the title information of the digital contents displayed on the screen 301. At this time, an infrared ray code corresponding to the user selection is transmitted to the controller 411 of the external recorder 410 via the converter 203 (operation 515).

After selecting the title, the user performs a key.operation to set a recording execution operation for the selected title.

At this time, the controller 201 determines if a recording command is input by the user (operation 517). When it is determined that the recording command is not input, the procedure returns to operation 513 such that the user can additionally select a title.

When it is determined that the recording command is input, the converter 203 transmits an infrared ray code corresponding to the recording command through the first signal line L1, and the controller 411 receives the infrared ray code through the receiver 412 (operation 519).

The controller 411 reads digital contents regarding at least one title selected by the user from the storage unit 414, and transmits the A/V signal of the digital contents restored by the image processor 413 to the disc-recorder 200 through the second signal line L2 (operation 521).

The controller 201 transmits the AN signal of the digital contents, which are received through the second signal line L2, to the television 300 for reproduction and records the A/V signal on the disc (DVD) provided in the storage unit 204 (operation 523).

The controller 201 determines if the recording operation has been completed by checking if a signal has been transmitted through the second signal line L2 while the selected digital contents are being recorded on the disc (operation 525). When it is determined that the recording operation has not been completed, the procedure returns to operation 521 such that contents can be continuously transmitted.

When it is determined that the recording operation has been completed, the controller 201 determines if an external dubbing completion command is input by the user (operation 527). From the result of the determination, when the external dubbing completion command is not input, the procedure returns to operation 513 such that the digital contents selected by the user can be continuously recorded.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A digital content recording apparatus comprising:
an external apparatus to store digital contents;
a controller to output a control command to select the stored digital contents; and
a recording system to transmit the control command of the controller to the external apparatus and record digital contents provided from the external apparatus on a recording medium.

2. The digital content recording apparatus as claimed in claim 1, wherein the recording medium includes a portable CD or DVD.

3. The digital content recording apparatus as claimed in claim 1, wherein the controller includes a remote controller that transmits an infrared ray code according to operations of keys corresponding to the control command.

4. The digital content recording apparatus as claimed in claim 1, wherein the controller includes a key to set an operation mode, a key to select the digital contents, and a key to perform a recording operation for the selected digital contents.

5. The digital content recording apparatus as claimed in claim 3, wherein the recording system and the external apparatus are spaced apart from each other and connected through a plurality of signal lines in order to exchange signals.

6. The digital content recording apparatus as claimed in claim 5, wherein the recording system includes a disc-recorder that records the digital contents on a disc and the external apparatus includes a DVR.

7. The digital content recording apparatus as claimed in claim 5, wherein at least one of the signal lines is a first signal line, through which the recording system analyzes the infrared ray code transmitted from the remote controller and transmits an infrared ray code converted corresponding to the analyzed infrared ray code to the external apparatus, and at least one of the signal lines is a second signal line through which the external apparatus transmits an A/V signal for the digital contents to the recording system.

8. The digital content recording apparatus as claimed in claim 6, further comprising:
a television connected to the disc-recorder that records the digital contents on the disc while reproducing the digital contents through the television.

9. The digital content recording apparatus as claimed in claim 6, wherein the DVR includes a photographing apparatus to monitor;
and a set-top box to broadcast reception, and records digital contents, which are obtained through the photographing apparatus or received through the set-top box, on an HDD or a DVD.

10. The digital content recording apparatus as claimed in claim 9, wherein the DVR comprises:
a receiver to receive the infrared ray code provided from the disc-recorder;
a controller to control an operation of transmitting title information of digital contents recorded on an HDD or a DVD and the digital contents to the disc-recorder according to the infrared ray code received through the receiver; and
an image processor to restore the digital contents recorded on the HDD or the DVD to convert the digital contents into an A/V signal.

11. The digital content recording apparatus as claimed in claim 6, wherein the disc-recorder comprises:
a receiver to receive the infrared ray code wirelessly transmitted through the remote controller; and
a converter to transmit an infrared ray code, which is converted to be recognized by the DVR by using a previously stored conversion table according to the received infrared ray code, through the signal lines.

12. The digital content recording apparatus as claimed in claim 11, wherein the converter includes an IR blaster.

13. A dubbing method of a digital content recording apparatus that connects a DVR that stores digital contents to a disc-recorder that records the digital contents, the method comprising:
transmitting a control command to record the digital contents of the DVR;
converting the control command to be recognized by the DVR, and transmitting the converted control command to the DVR;
transmitting title information of the digital contents stored in the DVR to the disc-recorder; displaying the received title information through a display apparatus connected to the disc-recorder;
selecting the digital contents, which is to be recorded, selected by a user through a remote controller based on the title information, and requesting transmission of the selected digital contents;
transmitting the selected digital contents from the DVR to the disc-recorder in response to the request; and
recording by the disc-recorder the received digital contents on a recording medium while reproducing the digital contents.

14. The dubbing method as claimed in claim 13, wherein the control command is transmitted using the remote controller to remotely control the disc-recorder.

15. The dubbing method as claimed in claim 14, wherein the remote controller includes a mode setting key that sets or releases an operation mode to record the digital contents of the DVR.
